# EUROPÄISCHE PATENTSCHRIFT

(11) **EP 1 055 187 B1**
(45) Veröffentlichungstag und Bekanntmachung des Hinweises auf die Patenterteilung: **15.01.2003**
(21) Anmeldenummer: 98958798.5
(22) Anmeldetag: 01.10.1998
(51) Int. Cl.: G06K 7/00

(54) **KARTENLESER**
CARD READER
LECTEUR DE CARTE

(30) Priorität: 04.10.1997 DE 19743936
(43) Veröffentlichungstag der Anmeldung: 29.11.2000
(73) Patentinhaber: ddm hopt + schuler GmbH & Co. KG, D-78628 Rottweil (DE)
(72) Erfinder: RAPP, Hans-Jochen, D-78628 Rottweil (DE)
(74) Vertreter: KOHLER SCHMID + PARTNER
(86) Internationale Anmeldenummer: DE9802920
(87) Internationale Veröffentlichungsnummer: WO99018535

(56) Entgegenhaltungen:
- DE-U- 29 717 712
- US-A- 4 873 425
- US-A- 5 508 501

## Beschreibung

Die Erfindung betrifft einen Kartenleser, in den eine Daten speichernde Karte für einen Informationsaustausch einführbar ist, mit einer die Karte etwa waagerecht in ihre Datenaustauschposition führenden Kartenführung, die in Einführrichtung auf einem Abschnitt unterbrochen ist, dessen Länge kürzer als die normale Kartenlänge ist, und die an ihrem Ende, in Einführrichtung hinter dem unterbrochenen Abschnitt, ein Auflager aufweist, mit einer unterhalb des unterbrochenen Abschnitts vorgesehenen Fallöffnung für Karten mit einer kürzeren Länge als die normaler Karten und mit einem sich vom Auflager entgegen der Einführrichtung bis unterhalb des unterbrochenen Abschnitts der Kartenführung erstreckenden bügelförmigen Auflaufabschnitt, dessen Auflauffläche in Einführrichtung schräg nach oben zum Auflager verläuft und ein nach unten hängendes vorderes Kartenende in die Datenaustauschposition auf das Auflager hochführt.

Ein derartiger Kartenleser ist beispielsweise durch die US-A-4 873 425 bekanntgeworden.

Die Länge von Karten, die einen integrierten Schaltkreis (Chipkarten) oder einen Magnetstreifen (Magnetkarten) tragen, ist genormt, und daher sind Kartenleser nur für diese "normale" Kartenlänge ausgelegt. Damit eine kürzere Karte nicht im Kartenleser steckenbleibt und dann das Einschieben einer weiteren Karte blockiert bzw. deren Datenaustausch beeinträchtigt, ist bei bekannten Kartenlesern die Kartenführung unterbrochen, so daß eine zu kurze Karte durch eine Fallöffnung im Boden des Kartenlesers nach unten aus dem Kartenleser herausfällt. Eine normallange Karte läuft in Einführrichtung nach der unterbrochenen Führung bzw. nach der Fallöffnung auf ein stegförmiges Auflager auf, das durch das freie Ende eines von der Rückseite des Kartenlesergehäuses entgegen der Einführrichtung abstehenden Vorsprungs gebildet ist. Dieses Auflager führt das vordere Kartenende in die Datenaustauschposition und bildet gleichzeitig ein Gegenlager, wenn in der Datenaustauschposition eine Leseeinheit auf die Kartenoberseite abgesenkt wird.

Obwohl das freie Ende des Vorsprungs mit einer die eingeführte Karte in die Datenaustauschposition hinführenden Auflaufschräge ausgebildet ist, besteht auch bei normallangen Karten, wenn ihre Oberfläche - z.B. aufgrund falscher Aufbewahrung - in Längsrichtung stark nach unten gekrümmt ist, die Gefahr, daß sie nicht auf das Auflager auflaufen, sondern unterhalb des Auflagers in einen Freiraum des Kartenlesers eingeführt werden, so daß sie für einen Benutzer unwiederbringbar im Kartenleser "verschwinden".

Bei der eingangs genannten US-A-4 873 425 ist der Auflaufabschnitt eine sich über die gesamte Kartenbreite erstreckende Auflauffläche. Auf dieser Auflauffläche kann auch eine stark nach unten gekrümmte Karte in ihre Datenaustauschposition auf das obere Ende des Auflaufabschnitts hochgeführt werden und eine eingeschobene, zu kurze Karte entgegen der Einführrichtung auf der gesamten Auflauffläche nach unten abgleiten. Für dieses Abgleiten müssen jedoch die Einbauhöhe und -tiefe des Kartenlesers entsprechend groß gewählt sein, was der eigentlich gewünschten Miniaturisierung entgegenlaufen würde.

Es ist daher die Aufgabe der vorliegenden Erfindung bei einem Kartenleser der eingangs genannten Art den Auflaufabschnitt so zu gestalten, daß bei geringer Einbauhöhe zu kurze Karten aus dem Bereich des Kartenlesers gelangen.

Diese Aufgabe wird erfindungsgemäß dadurch gelöst, daß der Auflaufabschnitt sich vom Auflager mittig der Kartenführung schräg in Richtung auf eine Seitenwand erstreckt.

Beim Einführen einer stark nach unten gekrümmten Karte läuft ihr in Einführrichtung vorderes Kartenende auf den Auflaufabschnitt auf und wird durch diesen bis auf das Auflager weiter- und hochgeführt. Je weiter sich der Auflaufabschnitt in den Bereich des unterbrochenen Abschnitts bzw. der Fallöffnung erstreckt, desto stärker kann das vordere Ende der Karte nach unten gekrümmt sein. Allerdings darf sich der Auflaufabschnitt nur so weit in den Bereich des unterbrochenen Abschnitts bzw. der Fallöffnung hinein erstrecken, daß das Herausfallen einer zu kurzen Karte aus der Fallöffnung nach unten und aus dem Kartenleser nicht behindert wird.

Bevorzugt ist das Auflager durch das freie Ende eines sich von der Rückseite des Kartenlesers entgegen der Einführrichtung erstreckenden Vorsprungs gebildet.

Eine besonders geringe Bauhöhe des Kartenlesers kann trotz des Auflaufabschnitts erreicht werden, wenn dieser einenends mit dem etwa mittig angeordneten Auflager und andernends mit der Seitenwand des Kartenlesers verbunden ist.

Der Auflaufabschnitt kann entweder zusammen mit dem Gehäuse des Kartenlesers als einstückiges Spritzteil hergestellt werden oder aber ein separates Teil sein, was ein besonders kostengünstiges Nachrüsten herkömmlicher Kartenlesern mit Auflaufabschnitten ermöglicht.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: eine Ansicht von unten auf ein Ausführungsbeispiel eines erfindungsgemäßen Kartenlesers;
- Fig. 2: eine Längsschnittansicht des in Fig. 1 gezeigten Kartenlesers, in den eine Karte mit gekrümmter Oberfläche eingeführt ist; und
- Fig. 3: den Kartenleser der Fig. 2, in den eine zu kurze Karte eingeführt ist.

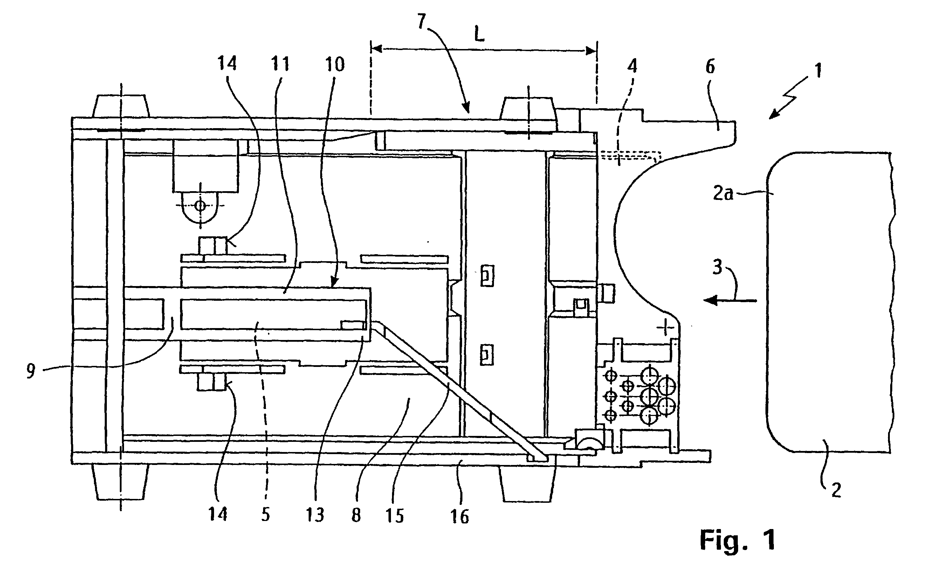

In Fig. 1 ist mit **1** ein Kartenleser bezeichnet, in den eine Karte **2** waagerecht in Einführrichtung **3** zum Datenaustausch mit z.B. einer Leseeinrichtung (nicht dargestellt) eingeschoben werden kann. Im Kartenleser 1 sind, in Einführrichtung **3** gesehen, eine hintere und eine vordere Kartenführung **4, 5** vorgesehen, wobei die hintere Kartenführung **4** durch eine schlitzförmige Öffnung in einem Mundstück **6** des Kartenlesers **1** gebildet ist. Zwischen diesen beiden Kartenführungen **4, 5** ist die Karte auf einer Länge **L** nicht geführt, d.h., im Abschnitt **7** ist die Kartenführung unterbrochen. Unterhalb des unterbrochenen Abschnitts **7** ist eine Fallöffnung **8** vorgesehen, durch die, wie unten noch genauer beschrieben, Karten **2'** mit einer kürzeren Länge als normale Karten **2** aus dem Kartenleser 1 nach unten herausfallen können.

Von der Rückseite (Rückwand) **9** des Kartenlesers 1 erstreckt sich entgegen der Einführrichtung 3 unterhalb der waagerechten Kartenbahnebene ein als Vorsprung **10** ausgebildetes Auflager **11**, auf dessen mit einer Auflaufschräge **12** versehenes freies Ende **13** das im unterbrochenen Abschnitt 7 nicht geführte vordere Kartenende **2a** beim weiteren Einführen der Karte 2 aufläuft. Wenn das vordere Kartenende 2a an zwei Anschlägen **14** im Kartenleser 1 anschlägt, ist die Datenaustauschposition erreicht und die Leseeinrichtung auf die Oberseite der Karte 2 für einen Datenaustausch abgesenkt oder absenkbar.

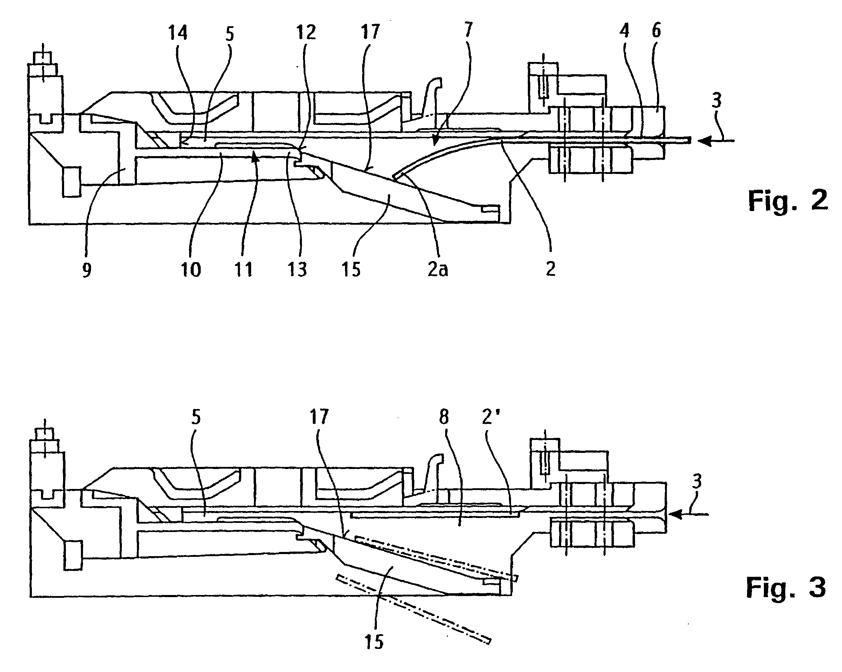

Mit dem freien Ende 13 des Vorsprungs 10 ist ein bügelförmiger Auflaufabschnitt **15** verbunden, der sich entgegen der Einführrichtung 3 und seitlich schräg zur Einführrichtung 3 erstreckt und andernends mit einer Seitenwand **16** des Kartenlesers 1 verbunden ist. Dieser Auflaufabschnitt 15 erstreckt sich bis unter den unterbrochenen Abschnitt 7 der Kartenführung, wobei seine obere Auflauffläche **17** (Fig. 2) entgegen der Einführrichtung 3 schräg nach unten verläuft.

Beim Einführen einer stark nach unten gekrümmten Karte 2 (Fig. 2) läuft ihr in Einführrichtung 3 vorderes Kartenende 2a bereits im unterbrochenen Abschnitt 7 der Kartenführung auf die Auflauffläche 17 des Auflaufabschnitts 15 auf und wird beim weiteren Einführen bis auf das Niveau des Vorsprungs 10 hochgeführt, auf dem es dann bis in die Datenaustauschposition weitergeführt wird. Ohne den Auflaufabschnitt 15 würde diese gekrümmte Karte 2 unter den Vorsprung 10 gelangen und z.B. dort "verschwinden", d.h., der Kartenleser 1 würde eine solche Karte 2 "verschlucken".

Wenn hingegen eine zu kurze Karte 2' mit einer Länge kleiner als die Länge L des unterbrochenen Abschnitts 7 in den Kartenleser 1 eingeführt wird (Fig. 3), so fällt sie aus der waagerechten Kartenbahnebene nach unten durch die Fallöffnung 8 auf die schiefe Auflauffläche 17, so daß sie auf dieser entgegen der Einführrichtung 3 nach unten abkippt und aus dem Kartenleser 1 herausfällt, wie in Fig. 3 strichpunktiert angedeutet ist.

Im gezeigten Ausführungsbeispiel ist der Auflaufabschnitt 15 ein separater Bügel, der am Vorsprung 10 und an der Seitenwand 16 lösbar oder unlösbar befestigt sein kann, z.B. eingehängt ist.

## Patentansprüche

1. Kartenleser (1), in den eine Daten speichernde Karte (2) für einen Informationsaustausch einführbar ist, mit einer die Karte (2) etwa waagerecht in ihre Datenaustauschposition führenden Kartenführung (4, 5), die in Einführrichtung (3) auf einem Abschnitt unterbrochen ist, dessen Länge (L) kürzer als die normale Kartenlänge ist, und die an ihrem Ende, in Einführrichtung hinter dem unterbrochenen Abschnitt, ein Auflager (11) aufweist,
mit einer unterhalb des unterbrochenen Abschnitts (7) vorgesehenen Fallöffnung (8) für Karten (2') mit einer kürzeren Länge als die normaler Karten (2) und mit einem sich vom Auflager (11) entgegen der Einführrichtung (3) bis unterhalb des unterbrochenen Abschnitts (7) der Kartenführung (4, 5) erstreckenden bügelförmigen Auflaufabschnitt (15), dessen Auflauffläche (17) in Einführrichtung (3) schräg nach oben zum Auflager (11) verläuft und ein nach unten hängendes vorderes Kartenende (2a) in die Datenaustauschposition auf das Auflager (11) hochführt,
**dadurch gekennzeichnet,**
**daß** der Auflaufabschnitt (15) sich vom Auflager (11) mittig der Kartenführung schräg in Richtung auf eine Seitenwand erstreckt.

2. Kartenleser nach Anspruch 1, **dadurch gekennzeichnet, daß** das Auflager (11) durch das freie Ende (13) eines sich von der Rückseite (9) des Kartenlesers (1) entgegen der Einführrichtung (3) erstreckenden Vorsprungs (10) gebildet ist.

3. Kartenleser nach einem der vorhergehenden Ansprüche, **dadurch gekennzeichnet, daß** der Auflaufabschnitt (15) einenends mit dem etwa mittig angeordneten Auflager (11) und andernends mit der Seitenwand (16) des Kartenlesers (1) verbunden ist.

4. Kartenleser nach einem der vorhergehenden Ansprüche, **dadurch gekennzeichnet, daß** der Auflaufabschnitt (15) zusammen mit dem Gehäuse des Kartenlesers (1) als einstückiges Spritzteil herstellbar ist.

5. Kartenleser nach einem der Ansprüche 1 bis 3, **dadurch gekennzeichnet, daß** der Auflaufabschnitt (15) ein separates Teil ist.

## Claims

1. Card reader (1) into which a data-storage card (2) is insertable for information exchange, comprising:
a card guide (4, 5) guiding the card (2) approximately horizontally in its data exchange position, which card guide (4, 5) is interrupted in the direction of insertion in a section of a length (L) shorter than the normal card length and has a support (11) provided at its end behind the interrupted section, viewed in the direction of insertion,
a drop opening (8) provided beneath the interrupted section (7) for cards (2') having a shorter length than normal cards (2),
and a guiding segment (15) extending from the support (11) opposite to the direction of insertion (3) below the interrupted section (7) of the card guide (4, 5), wherein the guiding surface (17) of the guiding segment (15) extends in an inclined fashion upwardly towards the support (11) and guides a dropping front card end (2a) up into the data exchange position on the support (11)
**characterized in**
**that** the guiding segment (15) extends from the support (11) in the center of the card guide in an inclined fashion towards a side wall.

2. Card reader according to claim 1, **characterized in that** the support (11) is formed by the free end (13) of a projecting part (10) extending from the rear side (9) of the card reader (1) opposite to the direction of insertion (3).

3. Card reader according to any of the preceding claims, **characterized in that** the guiding segment (15) is connected at one end with the support (11), which is disposed approximately in the center, and at the other end with a.side wall (16) of the card reader (1).

4. Card reader according to any one of the preceding claims, **characterized in that** the guiding segment (15) can be produced as a one-piece injection-molded part together with the housing of the card reader (1).

5. Card reader according to any of the claims 1 through 3, **characterized in that** the guiding segment (15) is a separate piece.

## Revendications

1. Lecteur de carte (1) dans lequel on peut introduire une carte (2) mémorisant des données pour un échange d'informations, comportant un guidage de carte (4, 5) guidant la carte (2) approximativement à l'horizontale dans sa position d'échange de données, lequel est interrompu en direction d'introduction (3) dans un tronçon dont la longueur (L) est plus courte que la longueur normale de la carte, et qui présente un appui (11) à son extrémité, derrière le tronçon interrompu en direction d'introduction,
comportant une ouverture de chute (8) prévue en dessous du tronçon interrompu (7) pour des cartes (2') avec une longueur plus courte que celle de cartes normales (2) et comportant un tronçon d'entrée (15) en forme d'étrier s'étendant depuis l'appui (11) à l'encontre de la direction d'introduction (3) jusqu'au-dessous du tronçon interrompu (7) du guidage (4, 5), et dont la surface inclinée (17) s'étend en direction d'introduction (3) en oblique vers le haut vers l'appui (11) et guide vers le haut une extrémité antérieure de carte (2a) qui pend vers le bas jusque dans la position d'échange de données sur l'appui (11),
**caractérisé en ce que** le tronçon d'entrée (15) s'étend depuis l'appui (11) au milieu du guidage de carte en oblique en direction d'une paroi latérale.

2. Lecteur de carte selon la revendication 1, **caractérisé en ce que** l'appui (11) est formé par l'extrémité libre (13) d'une saillie (10) s'étendant depuis la face postérieure (9) du lecteur de carte (1) à l'opposé de la direction d'introduction (3).

3. Lecteur de carte selon l'une des revendications précédentes, **caractérisé en ce que** le tronçon d'entrée (15) est relié à une extrémité avec l'appui (11) agencé approximativement au milieu, et à l'autre extrémité, avec la paroi latérale (16) du lecteur de carte (1).

4. Lecteur de carte selon l'une des revendications précédentes, **caractérisé en ce que** le tronçon d'entrée (15) peut être fabriqué conjointement avec le boîtier du lecteur de carte sous forme de pièce moulée par injection d'un seul tenant.

5. Lecteur de carte selon l'une des revendications 1 à 3, **caractérisé en ce que** le tronçon d'entrée (15) est une pièce séparée.
